# NEUE EUROPÄISCHE PATENTSCHRIFT

(11) **EP 0 659 243 B2**
(45) Veröffentlichungstag und Bekanntmachung des Hinweises auf die Entscheidung über den Einspruch: **09.02.2000**
(45) Hinweis auf die Patenterteilung: 12.06.1996
(21) Anmeldenummer: 93918897.5
(22) Anmeldetag: 18.08.1993
(51) Int. Cl.: F16D 66/02

(54) **BELAGVERSCHLEISSDETEKTOR FÜR EINE SCHEIBENBREMSE**
PAD WEAR DETECTOR FOR A DISC BRAKE
DETECTEUR D'USURE DE LA GARNITURE D'UN FREIN A DISQUE

(30) Priorität: 15.09.1992 DE 4230831
(43) Veröffentlichungstag der Anmeldung: 28.06.1995
(73) Patentinhaber: KNORR-BREMSE Systeme für Nutzfahrzeuge GmbH, 80809 München (DE)
(72) Erfinder: BAUMGARTNER, Hans, D-85368 Moosburg (DE); BIEKER, Dieter, D-81827 München (DE); WERTH, Michael, D-81739 München (DE)
(74) Vertreter: Specht, Peter, Dipl.-Phys.
(86) Internationale Anmeldenummer: DE9300754
(87) Internationale Veröffentlichungsnummer: WO9407050

(56) Entgegenhaltungen:
- EP-A- 0 460 371
- EP-A- 0 566 006
- WO-A-92/09822
- DE-A- 3 921 294
- DE-A- 4 041 318

## Beschreibung

Die Erfindung betrifft einen Belagverschleißdetektor nach dem Oberbegriff des Anspruches 1, weiter aus der DE 39 21 2 94 A1 bekannt ist.

Scheibenbremsen, für die der erfindungsgemäße Belagverschleißdetektor insbesondere geeignet ist, sind beispielsweise auch aus der DE-A-37 16 202, der DE-A-40 32 885 sowie aus der nicht vorveröffentlichten DE-A-42 12 387 bekannt. Bei diesen bekannten Scheibenbremsen, die durch Druckluft bzw. pneumatisch betätigt werden und deren hauptsächlicher Einsatzbereich daher bei Nutzfahrzeugen liegt, wird eine Bremsscheibe von einem in Axialrichtung verschiebbar gelagerten Bremssattel umfaßt, auf dessen einer Seite eine druckluftbetätigte Zuspannvorrichtung vorgesehen ist, die bei ihrer Betätigung eine auf dieser Seite der Bremsscheibe befindliche Bremsbacke gegen die Bremsscheibe druckt, worauf sich der Bremssattel aufgrund der Reaktionskräfte in Gegenrichtung verschiebt und infolgedessen eine auf der gegenüberliegenden Seite befindliche Bremsbacke gleichfalls gegen die Bremsscheibe preßt.

Die Zuspannvorrichtung weist bei diesen bekannten Scheibenbremsen als Zuspannelement eine Traverse auf, in der mindestens eine Stellspindel in einem entsprechenden Gewinde gelagert ist. Folglich kann das Lüftspiel, das heißt der Abstand der Bremsbacken zur Bremsscheibe im unbetätigten Zustand, unter Ausgleich der sich durch Abrieb ändernden Belagstärke mittels einer Nachstelleinrichtung konstant gehalten werden, die mit jeder Stellspindel drehfest gekoppelt ist und diese immer dann um einen bestimmten Winkel dreht wenn die Bremsbacken nach Überwindung des Soll-Lüftspiels noch nicht an der Bremsscheibe anliegen. Jede Stellspindel wird demzufolge von der Nachstelleinrichtung mit zunehmendem Belagverschleiß weiter zur Bremsscheibe hin verschraubt. Eine derartige Stellspindel stellt somit ein in axialer Richtung wirkendes Stellelement dar.

Um den Fahrer jederzeit über die restliche Belagstärke in Kenntnis zu setzen, so daß ein gegebenenfalls erforderlicher Belagwechsel nicht übersehen werden kann, wird in den eingangs genannten DE-A-40 41 318 und DE-A-42 12 387 vorgeschlagen, einen Belagverschleißdetektor vorzusehen, der einen von der Nachstelleinrichtung betätigten Drehwinkelgeber aufweist, dessen Ausgangssignal als entsprechendes Verschleißmaß ausgewertet werden kann. Diese Art der Verschleißerfassung basiert auf der Überlegung, daß die Drehbewegung der Nachstelleinrichtung, die unmittelbar auf die betreffende Spindel bzw. das Stellelement übertragen wird, proportional zur Nachstellbewegung und damit zum verschleißmaß des Bremsbelags ist. Die bekannten Belagverschleißdetektoren erfassen demnach zur Erfassung eines Verschleißsignals im Grunde die axiale Relativlage des Stellelements der Nachstelleinrichtung.

Da bei den bekannten Belagverschleißdetektoren unmittelbar die Drehbewegung der Nachstelleinrichtung ausgewertet werden kann, ist es möglich, als Detektor bzw. Signalgeber ein Drehpotentiometer zu verwenden. Derartige Drehpotentiometer sind in zahlreichen Ausführungsformen erhältlich und dementsprechend billig; auch die Zuverlässigkeit solcher Drehpotentiometer ist aufgrund ihrer häufigen Anwendung in zahlreichen Gebieten der Elektrotechnik mittlerweile ziemlich weit entwickelt. Jedoch sind die gattungsgemäßen Scheibenbremsen ständigen Vibrationen und Erschütterungen ausgesetzt und entwickeln darüberhinaus eine nicht unerhebliche Hitze (beispielsweise kann die Temperatur der Scheibe mehrere 100 Grad erreichen). Diese hohen Belastungen haben zur Folge, daß selbst hochwertige Drehpotentiometer hier nur eine begrenzte Lebensdauer aufweisen, so daß ein Ausfall des Drehpotentiometers nicht ausgeschlossen werden kann.

Um in einem solchen Fall das schadhafte Drehpotentiometer gegen ein neues austauschen zu können, ist es bei den bekannten Scheibenbremsen erforderlich, die bremsscheibenabgewandte Abdeckung der Zuspannvorrichtung ab- und anschließend wieder anzuschrauben. Aufgrund des beengten Einbauraums derartiger Scheibenbremsen ist es häufig nicht möglich, diese Abdeckung ohne Demontage der gesamten Scheibenbremse zu entfernen. Somit stellt der Einbau eines neuwertigen Belagverschleißdetektors einen höchst komplizierten und aufwendigen Vorgang dar, der entsprechend kostenintensiv ist.

Die DE 3921294 A1 schlägt vor, den Belagverschleißdetektor in einem separaten, an der Scheibenbremse lösbar befestigbaren Gehäuse anzuordnen. wobei der Belagverschleißdetektor von der Nachstelleinrichtung über ein lösbares Kupplungselement betätigt wird. Infolgedessen kann die Demontage eines schadhaften Detektors äußerst einfach durchgeführt werden, indem das Gehäuse von der Scheibenbremse entfernt wird, wobei im Laufe dieses Vorgangs die Kupplung gelöst wird, so daß der Detektor gleichzeitig von der Nachstelleinrichtung abgekoppelt wird. Die Montage eines neuen Detektors kann in umgekehrter Reihenfolge auf genauso einfache Weise durchgeführt werden. Aufgrund der vergleichsweise geringen Abmessungen des Gehäuses bzw. des Detektors können diese Wartungsarbeiten selbst im beengten Einbauraum der Scheibenbremse problemlos durchgeführt werden, so daß keine anderen Teile der Scheibenbremse entfernt werden müssen und die gesamten Reparaturkosten entsprechend niedrig sind.

Scheibenbremsen der gattungsgemäßen Art weisen in Abhängigkeit vom jeweiligen Fahrzeug eine jeweils andere Einbaulage auf: hierdurch ergibt sich das Problem, daß die Signalleitungen des Detektors, mittels denen das von diesem erzeugte Verschleißsignal einer externen Auswertungseinrichtung zugeführt wird, jeweils in einer anderen Richtung vom Bremsengehäuse wegzuführen sind: andererseits gibt die zur Abdichtung erforderliche Kabelzuführung der Signalleitungen bei den bekannten Scheibenbremsen eine bestimmte Anfangsrichtung für die Signalleitungen vor. Bei bestimmten Einbaulagen der Scheibenbremse ergibt sich daher zwangsläufig eine ungünstige Kabelführung, die gegebenenfalls sogar zu einem Kabelbruch führen kann.

Es ist die Aufgabe der Erfindung, dieses Problem der Kabelbruchgefahr zu beheben.

Diese Aufgabe kann mittels des erfindungsgemäßen Belagverschleißdetektors auf einfache und kostengünstige Weise dadurch gelöst werden, daß das Gehäuse drehbar an einem Deckelteil der Scheibenbremse befestigt wird. Hierdurch ist es möglich, in Abhängigkeit von der jeweiligen Einbaulage der Scheibenbremse diejenige Richtung einzustellen, die für die Kabelführung jeweils optimal geeignet ist. In diesem Zusammenhang empfiehlt es sich, eine freie Drehbarkeit um 360° vorzusehen, wobei es gemäß Anspruch 5 weiterhin von Vorteil ist, mittels einer Rasterverzahnung lediglich eine stufenweise Verdrehung zuzufassen. Hierdurch wird erreicht, daß die Signalleitungen gegebenenfalls in einer bevorzugten Richtung fest ausgerichtet werden können.

Gemäß der im Anspruch 2 angegebenen Weiterbildung der Erfindung ist es von besonderem Vorteil, wenn der Belagverschleißdetektor im Gehäuse befestigt ist und mit diesem eine entsprechende integrale Baueinheit bildet. Hierdurch wird nämlich erreicht, daß beim Entfernen des Gehäuses der Belagverschleißdetektor gleichzeitig von der Nachstelleinrichtung abgekoppelt wird, so daß weniger Handgriffe erforderlich sind. Diese Integration des Belagverschleißdetektors im Gehäuse erfolgt vorzugsweise dadurch, daß der Belagverschleißdetektor im Gehäuse mittels einer Schnappbefestigung befestigt wird. Hierdurch ist es möglich, die Herstellungskosten dieser integrierten Detektoreinheit vergleichsweise niedrig zu halten: gleichwohl ist es möglich, bei Wartungsarbeiten lediglich den Belagverschleißdetektor auszutauschen und das Gehäuse weiterzuverwenden.

Eine besonders einfache Montage und Demontage des erfindungsgemäßen Belagverschleißdetektors ergibt sich gemäß Anspruch 6 dann, wenn das Gehäuse mittels einer Schnappbefestigung am Deckelteil der Scheibenbremse befestigt wird. In diesein Fall besteht nämlich die Möglichkeit, einen Austausch des Belagverschleißdetektors gegebenenfalls ohne zusätzliche Werkzeuge vorzunehmen. Darüberhinaus hat diese Befestigungsart den Vorteil, daß der Belagverschleißdetektor selbst dann noch ausgetauscht werden kann, wenn die Scheibenbremse in einem engen Einbauraum nur schwer zugänglich ist.

Um zu verhindern, daß die sichere Funktionsweise der Scheibenbremse durch eintretende Feuchtigkeit oder dergleichen beeinträchtigt wird, empfiehlt es sich zwischen dem Gehäuse und seinem Sitz an der Scheibenbremse bzw. am Deckelteil der Nachstelleinrichtung ein Dichtelement anzuordnen. Hierbei kann es sich beispielsweise um einen O-Ring, einen Vierkant-Ring oder um ein ähnliches, aus Gummi oder Silikon bestehendes Teil handeln.

Untersuchungen haben gezeigt, daß das erfindungsgemäße Gehäuse des Belagverschleißdetektors vorzugsweise aus Kunststoff hergestellt werden sollte: dieses Material ermöglicht es einerseits, problemlos die vorgenannten Schnappbefestigungen herzustellen, und bietet andererseits die Vorteile einer sehr preisgünstigen Herstellung sowie der Korrosionsfestigkeit.

Bei der bevorzugten Ausführungsform des Belagverschleißdetektors, bei dem dieser ein Drehwinkelsensor beispielsweise in Form eines Drehpotentiometers ist, empfiehlt es sich gemäß Anspruch 10, als Kupplungselement ein an der Nachstelleinrichtung befestigtes Ritzel vorzusehen das in eine entsprechende Innenverzahnung des Drehwinkelsensors bzw. Drehpotentiometers eingreift. Auf diese Weise kann der erforderliche Antrieb des Potentiometers gleichzeitig die Kupplungsfunktion für die Montage und Demontage erfüllen.

Bezüglich noch anderer vorteilhafter Weiterbildungen der Erfindung wird auf die verbleibenden Unterensprüche verwiesen.

Die Erfindung wird nachstehend anhand der Beschreibung eines Ausführungsbeispiels unter Bezugnahme auf die Zeichnung näher erläutert. Es zeigen:
Fig.1 schematisch den prinzipiellen Aufbau der Nachstelleinrichtung einer Scheibenbremse samt eines mit dieser gekoppelten Belagverschleißdetektors:
Fig.2 eine vergrößerte Querschnittsansicht des in Fig.1 gezeigten Belagverschleißdetektors: und
Fig.3 eine Draufsicht auf den Belagverschleißdetektor.

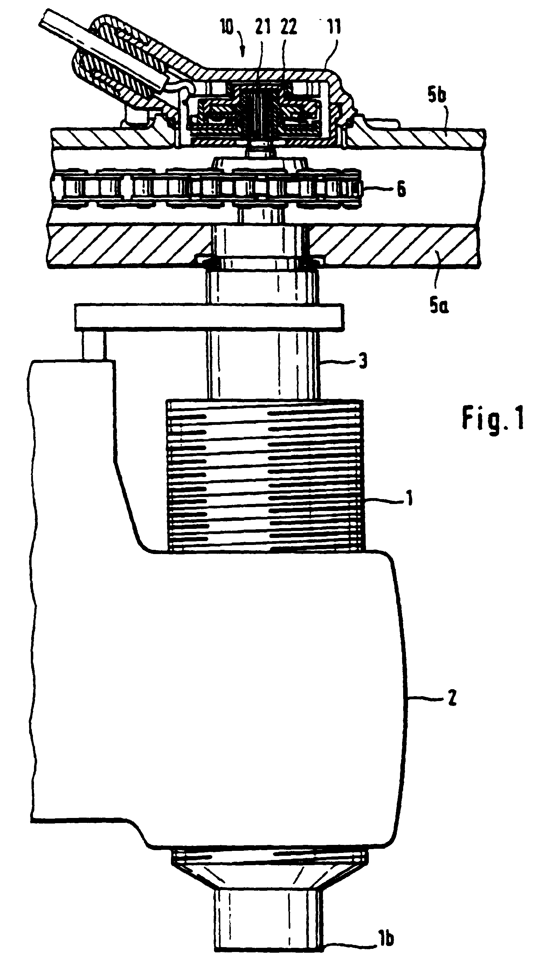

Fig.1 zeigt schematisch die wesentlichen Komponenten der Nachstelleinrichtung einer Scheibenbremse, deren genauer Aufbau beispielsweise der aus der DE-OS 37 16 202 bekannten Scheibenbremse entsprechen kann. Eine derartige Scheibenbremse weist eine (nicht näher gezeigte) Zuspannvorrichtung auf, die bei Druckluftbeaufschlagung mittels eines Drehhebels eine Traverse 2 zu einer Bremsscheibe hin bewegt; die Richtung dieser Zuspannbewegung ist in Fig.1 mit einem Pfeil angedeutet. In dieser Traverse 2 sind in entsprechenden Innengewinden zwei Stellspindeln verschraubt, von denen in Fig. 1 lediglich die rechte Stellspindel 1 gezeigt ist. Eine derartige Zuspannvorrichtung wird daher als "zweispindelig" bezeichnet: es sei jedoch darauf hingewiesen, daß die Erfindung selbstverständlich auch für eine "einspindelige" Zuspannvorrichtung verwendbar ist.

Bei dem genannten Zuspannvorgang drückt das untere Ende 1b der Stellspindel 1 (und dementsprechend das untere Ende der nicht dargestellten zweiten Stellspindel) über ein (ebenfalls nicht dargestelltes) Druckstück gegen die diesseitige Bremsbacke, so daß deren Bremsbelag mit der Bremsscheibe in Berührung gelangt. Wenn die Zuspannvorrichtung weiter zuspannt, verschiebt sich der Bremssattel der Scheibenbremse in seiner Lagerung in Axialrichtung, so daß schließlich auch die gegenüberliegende Bremsbacke die Bremsscheibe berührt. Zu diesem Zeitpunkt beginnt der eigentliche Bremsvorgang, dessen Stärke mittels des auf die Zuspannvorrichtung ausgeübten Druckes gesteuert werden kann.

Wenn die beiden gegenüberliegenden Bremsbacken der Scheibenbremse im verlauf des vorstehend erläuterten Zuspannvorgangs um eine vorbestimmte einem Soll-Lüftspiel entsprechende Strecke verschoben worden sind, wird eine im Inneren der Stellspindel 1 angeordnete Nachstelleinrichtung 3 durch die über eine Kette 6 ausgeübte Antriebskraft um einen bestimmten Winkel gedreht. Da die Nachstelleinrichtung über eine Axialverzahnung drehfest mit der Stellspindel 1 gekoppelt ist, wird diese um einen entsprechenden Winkel gedreht. Eine derartige Drehung findet jedoch nur dann statt, wenn beide Bremsbacken nach Überwindung des Soll-Lüftspiels noch nicht an der Bremsscheibe anliegen. Andernfalls wird die auf die Nachstelleinrichtung 3 ausgeübte Drehkraft über eine Rutschkupplung abgebaut.

Aus der vorstehend erläuterten Funktionsweise einer derartigen Nachstelleinrichtung wird deutlich, daß der von der Stellspindel 1 ausgeführte Axialversatz unmittelbar proportional zum Belagverschleiß der Bremsbacken ist. Der Axialversatz der Stellspindel 1 ist seinerseits proportional zur Drehbewegung der Nachstelleinrichtung, so daß durch Erfassen der Drehbewegung der Nachstelleinrichtung 3 ein entsprechendes Verschleißsignal abgeleitet werden kann. Es sei jedoch darauf hingewiesen, daß die Erfindung auch bei solchen Belagverschleißdetektoren anwendbar ist, die unmittelbar den Axialversatz der Nachstelleinrichtung erfassen.

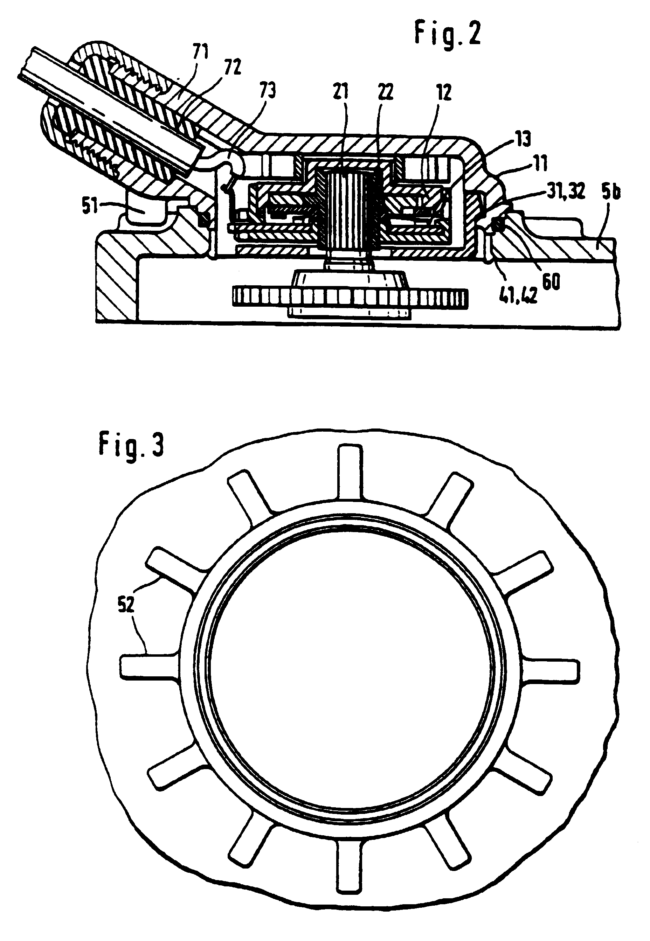

Der erfindungsgemäße Belagverschleißdetektor sitzt in einem Gehäuse 11, das an einer Gehäuseabdeckung bzw. einem Deckelteil 5b der Zuspannvorrichtung lösbar befestigt ist. Wie insbesondere der Querschnittsansicht der Fig.2 zu entnehmen ist, erfolgt die Befestigung des Gehäuses 11 am Deckelteil 5b mittels einer Schnappbefestigung, die aus mehreren, nach unten weisenden Nasen 41 gebildet ist, die die Innenränder einer geeignet geformten Bohrung des Deckelteils 5b umgreifen. Um zu erreichen, daß ins Innere der Zuspannvorrichtung kein Schmutz und keine Feuchtigkeit eindringen kann, ist am Außenumfang des Gehäuses 11 eine ringförmige Dichtung 60 in Form eine O-Rings oder eines Vierkant-Rings, der beispielsweise aus Silikon oder Gummi besteht, angeordnet.

Im Inneren des Gehäuses 11 ist ein Belagverschleißdetektor in Form eines Drehpotentiometers 12 angeordnet. Das Drehpotentiometer 12 wird über ein Untersetzungsgetriebe 13 angetrieben, das seinerseits über eine Innenverzahnung 22 von einem Ritzel 21 angetrieben wird. Das Ritzel 21 ist am hinteren Ende der Nachstelleinrichtung 3 befestigt, so daß das Untersetzungsgetriebe 13 proportional zum Belagverschleiß angetrieben wird. Um zu erreichen, daß das Ausgangssignal des Drehpotentiometers 12 trotz mehrerer Umdrehungen der Stellspindel 1 einen eindeutigen Wert darstellt, ist der Untersetzungsfaktor des Untersetzungsgetriebes 13 so gewählt, daß die von der Nachstelleinrichtung 1 während des gesamten Nachstellzyklus' insgesamt durchgeführten Umdrehungen auf höchstens eine Umdrehung reduziert werden. Zur Erzielung einer möglichst kompakten Bauweise handelt es sich bei dem Untersetzungsgetriebe 13 vorzugsweise um ein sogenanntes Zykloidengetriebe. Im übrigen wird bezüglich näherer Einzelheiten eines derartigen, mit einem Untersetzungsgetriebe versehenen Drehpotentiometers auf die nicht vorveröffentlichte DE-A-42 12 387 verwiesen. auf deren Offenbarung voll inhaltlich Bezug genommen wird. Wie aus dieser älteren Anmeldung hervorgeht, empfiehlt es sich bei einer derartigen Getriebe/Potentiometer-Anordnung, das Untersetzungsgetriebe in einer (nicht näher gezeigten) Lagerungsvorrichtung zu lagern, die derart aufgebaut ist, daß das Untersetzungsgetriebe 13 zwar drehfest, jedoch unter Aufrechterhallung einer Längs- und Querschiebbarkeit getragen wird. Hierdurch wird erreicht. daß nicht zu vermeidende Schwenk- und Nickbewegungen der Nachstelleinrichtung ohne Einfluß auf die erzielbare Meßgenauigkeit kompensiert werden können.

Der erfindungsgemäße Belagverschleißdetektor bzw. die in der Ausführungsform dargestellte Kombination aus einem Untersetzungsgetriebe 13 und dem Drehpotentiometer 12 sind im Gehäuse 11 befestigt und bilden somit mit diesem eine integrale Baueinheit. Die Befestigung im Gehäuse 11 erfolgt dabei mittels einer Schnappvorrichtung, die durch mehrere, einander zugeordnete Nasen 31 und 32 gebildet ist. Am Gehäuse 11 ist weiterhin eine Kabel zuführung 71 in Form eines im wesentlichen rohrartigen, schräg nach oben verlaufenden Ansatzes ausgebildet. Durch diese Kabelzuführung erfolgt über mindestens eine Signalleitung 73 der Signalabgriff am Drehpotentiometer 12, wobei über ein entsprechendes Dichtelement 72 sichergestellt ist, daß keine Feuchtigkeit oder Schmutz ins Innere gelangen kann. Der Anschluß der Signalleitung(en) 73 am Drehpotentiometer 12 kann beispielsweise durch Löten erfolgen.

Wie insbesondere aus der Draufsicht der Fig.3 zu erkennen ist, ist am Umfang des Gehäuses 11 eine Rasterverzahnung 52 vorgesehen, die mit einer nach unten weisenden Nase 51 in Eingriff steht. Hierdurch ist es möglich, die Montagerichtung des Gehäuses 11 in bestimmten Winkelabständen festzulegen. Dies ermöglicht es, die Signalleitung(en) 73 über die Kabelzuführung 71 so auszurichten, daß in Abhängigkeit von der jeweiligen Einbaulage der Scheibenbremse ein optimaler kabelverlauf gewährleistet ist.

Zur Demontage des erfindungsgemäßen Belagverschleißdetektors wird von Hand oder gegebenenfalls unter Zuhilfenahme eines Schraubenziehers oder dergleichen solange nach oben ein gewisser Druck ausgeübt, bis die Nasen 41 außer Eingriff mit dem unteren Rand 42 der Gehäusebohrung geraten: das Gehäuse 11 kann dann mitsamt der in seinem Inneren befindlichen Drehpotentiometer/Getriebe-Anordnung nach oben abgezogen werden, wobei das Ritzel 21 außer Eingriff mit der Innenverzahnung 22 des Untersetzungsgetriebes 13 gerät. Das Montieren eines neuen oder generalüberholten Detektors geschieht auf ebenso einfache Weise in umgekehrter Reihenfolge.

Bezüglich weiterer, nicht näher erläuterter Vorteile und Wirkungen der Erfindung wird auf die Zeichnung verwiesen

## Patentansprüche

1. Belagverschieißdetektor (10) für eine Scheibenbremse mit einer Nachstellvorrichtung (3, 6), die das Luftspiel der Bremsbacken mittels mindestens eines in axialer Richtung wirkenden Stellelementes (1) im wesentlichen konstant hält und mit dem Belagverschleißdetektor (10) derart gekoppelt ist, dieser die axiale Relativlage des Stellelementes (1) erfaßt und hieraus ein entsprechendes Verschleißsignal ableitet, wobei der Belagverschleißdetektor (10) in einem seperaten, mittels einer Schnappbefestigung (41, 42) an einem Deckelteil (5b) der Scheibenbremse lösbar befestigbaren Gehäuse angeordnet ist und von der Nachstelleinrichtung (3, 6) über ein lösbares Kupplungselement (21, 22) betätigbar ist,
dadurch gekennzeichnet, daß
das Gehäuse (11) drehbar an dem Deckelteil (5b) der Scheibenbremse befestigt ist.

2. Belagverschleißdetektor nach Anspruch 1, *dadurch gekennzeichnet*, daß der Belagverschleißdetektor *(10)* im Gehäuse *(11)* befestigt ist und mit diesem eine integrale Baueinheit bildet.

3. Belagverschleißdetektor nach Anspruch 2, *dadurch gekennzeichnet*, daß der Belagverschleißdetektor *(10)* mittels einer Schnappbefestigung *(31,32)* im Gehäuse *(11)* befestigt ist.

4. Belagverschleißdetektor nach Anspruch 1, *dadurch gekennzeichnet*, daß das Gehäuse *(11)* um 360° drehbar ist.

5. Belagverschleißdetektor nach Anspruch 1 oder 4, *dadurch gekennzeichnet*, daß das Gehäuse *(11)* mittels einer Rastvorrichtung, vorzugsweise in Form einer Rasterverzahnung *(51,52)* stufenweise drehbar ist.

6. Belagverschleißdetektor nach einem der Ansprüche 1 bis 5, *dadurch gekennzeichnet*, daß zwischen dem Gehäuse *(11)* und seinem Sitz an der Scheibenbremse ein Dichtelement *(60)* in Form eines O-Rings, eines Vierkant-Rings oder dergleichen angeordnet ist.

7. Belagverschleißdetektor nach einem der Ansprüche 1 bis 6, *dadurch gekennzeichnet*, daß eine im Gehäuse *(11)* ausgebildete Kabelzuführung *(71)* eine Abdichtung (72) für die Signalleitung(en) des Detektors aufweist.

8. Belagverschleißdetektor nach einem der Ansprüche 1 bis 7, *dadurch gekennzeichnet*, daß das Gehäuse *(11)* aus Kunststoff gebildet ist.

9. Belagverschleißdetektor nach einem der Ansprüche 1 bis 8 *dadurch gekennzeichnet*, daß die Nachstelleinrichtung *(3,6)* das bzw. die Stellelement(e) *(1)* mittels einer Drehbewegung nachstellt, wobei der Belagverschleißdetektor *(10)* einen Drehantrieb zur Erfassung des jeweiligen Drehwinkels aufweist und wobei das Kupplungselement aus einem Ritzel *(21)* besteht, das in eine entsprechende Innenverzahnung *(22)* des Belagverschleißdetektors *(10)* eingreift.

10. Belagverschleißdetektor nach Anspruch 9, *dadurch gekennzeichnet*, daß der Belagverschleißdetektor *(10)* ein Drehpotentiometer *(12)* aufweist.

11. Belagverschleißdetektor nach Anspruch 10, *dadurch gekennzeichnet,* daß zwischen dem Drehpotentiometer *(12)* und dem Kupplungselement *(21,22)* ein Untersetzungsgetriebe *(13)* vorzugsweise in Form eines Zykloidengetriebs angeordnet ist.

12. Belagverschleißdetektor nach Anspruch 11, *dadurch gekennzeichnet*, daß das Untersetzungsgetriebe *(13)* in einer Lagerungsvorrichtung gelagert ist, die das Untersetzungsgetriebe *(13)* drehfest, jedoch unter Aufrechterhaltung einer Längs- und Querverschiebbarkeit trägt.

13. Belagverschleißdetektor nach Anspruch 12, *dadurch gekennzeichnet*, daß das Untersetzungsgetriebe *(13)* und seine Lagerungsvorrichtung eine intergrale Baueinheit mit dem Drehpotentiometer *(12)* bilden und zusammen mit diesem im Gehäuse *(11)* befestigt sind.

## Claims

1. Pad wear detector (10) for a disk brake, comprising an adjusting means (3, 6) which maintains the ventilation gap of the brake shoes substantially constant by means of at least one adjuster *(1)* acting in the axial direction and coupled to the pad wear detector *(10)* in such a way that the latter detects the relative axial position of said adjuster *(1)* and derives therefrom a corresponding wear signal, with the pad wear detector *(10)* being arranged in a separate housing *(11)* detachably secured to a lid element *(5b)* of the disk brake by means of a snap-on fastening means *(41, 42)* and being adapted for being actuated by said adjusting means *(3, 6)* via a releasable coupling component *(21, 22)*,
*characterised in that*
said housing *(11)* is fastened for rotation on said lid element *(5b)* of the disk brake.

2. Pad wear detector according to Claim 1, *characterised in* that the pad wear detector *(10)* is fastened inside said housing *(11)* and co-operates therewith for forming an integral component.

3. Pad wear detector according to Claim 2, *characterised in* that the pad wear detector *(10)* is fastened inside said housing *(11)* by means of a snap-on fastening means *(31, 32)*.

4. Pad wear detector according to Claim 1, *characterised in* that said housing *(11)* is rotatable through 360°.

5. Pad wear detector according to Claim 1 or 4, *characterised in* that said housing (11) is rotatable in steps by means of a latching means, preferably in the form of a locking serration means *(51, 52)*.

6. Pad wear detector according to any of the Claims 1 to 5, *characterised in* that a sealing member *(60)* in the form of an O-ring, a square ring or the like is disposed between said housing *(11)* and its seat on the disk brake.

7. Pad wear detector according to any of the Claims 1 to 7, *characterised in* that a cable duct *(71)* formed in said housing *(11)* comprises a seal *(72)* for the signal line(s) of the detector.

8. Pad wear detector according to any of the Claims 1 to 7, *characterised in* that said housing *(11)* is made of a plastic material.

9. Pad wear detector according to any of the Claims 1 to 8, *characterised in* that said adjusting means *(3, 6)* adjusts said adjuster(s) *(1)* by way of a rotating movement, with the pad wear detector *(10)* comprising a rotational drive for detecting the respective angle of rotation, and wherein said coupling component consists of a pinion *(21)* which engages in a corresponding internal toothing *(22)* of the pad wear detector *(10)*.

10. Pad wear detector according to Claim 9, *characterised in* that the pad wear detector *(10)* comprises a revolving potentiometer *(12)*.

11. Pad wear detector according to Claim 10, *characterised in* that a reduction gear *(13)*, preferably in the form of a cycloid-type gearing, is disposed between said revolving potentiometer *(12)* and said coupling component *(21, 22)*.

12. Pad wear detector according to Claim 11, *characterised in* that said reduction gear *(13)* is supported in a bearing device which carries said reduction gear *(13)* so as to prevent it from rotation whilst displaceability in the longitudinal and transverse directions is maintained.

13. Pad wear detector according to Claim 12, *characterised in* that said reduction gear *(13)* and its bearing device co-operate with said revolving potentiometer *(12)* so as to form an integral component, and are fastened inside said housing *(11)* together with said potentiometer.

## Revendications

1. Détecteur d'usure de la garniture *(10)* pour un frein à disque, comprenant un dispositif de rattrapage *(3, 6)* à maintenir essentiellement constant le jeu de ventilation des mâchoires de frein moyennant au moins un élément de réglage *(1)*, qui agit en direction axiale et qui est accouplé au détecteur d'usure de la garniture *(10)* de manière à ce que celui-ci détecte la position axiale relative dudit élément de réglage *(1)* et dérive de celui-ci un signal d'usure correspondant, au détecteur d'usure de la garniture *(10)* étant disposé dans un boîtier séparé *(11)*, qui est fixé, de façon détachable, à un élément de couvercle *(5b)* du frein à disque moyennant un moyen de fixation à déclic *(41, 42)*, et étant adapté à être actionné par ledit dispositif de rattrapage *(3, 6)* via un élément accoupleur desserrable *(21, 22)*,
*caractérisé en ce que*
ledit boîtier *(11)* est fixé sur ledit élément de couvercle *(5b)* du frein à disque de manière à permettre sa rotation.

2. Détecteur d'usure de la garniture selon la revendication 1, *caractérisé en ce* que le détecteur d'usure de la garniture *(10)* est fixé à l'intérieur dudit boîtier *(11)* et coopère avec le dernier de façon à former une unité intégrale.

3. Détecteur d'usure de la garniture selon la revendication 2, *caractérisé en* ce que le détecteur d'usure de la garniture *(10)* est fixé à l'intérieur dudit boîtier *(11)* moyennant un moyen de fixation à déclic *(31, 32)*.

4. Détecteur d'usure de la garniture selon la revendication 1, *caractérisé en ce* que ledit boîtier *(11)* peut tourner par 360°.

5. Détecteur d'usure de la garniture selon la revendication 1 ou 4, *caractérisé en ce* que ledit boîtier *(11)* peut être tourné en paliers moyennant un dispositif à crans, de préférence sous forme d'une denture à cranter *(51, 52)*.

6. Détecteur d'usure de la garniture selon une quelconque des revendications 1 à 5, *caractérisé en ce* qu'un élément d'étanchéité *(60)* sous forme d'un joint torique, d'une rondelle à quatre pans ou d'un élément similaire est disposé entre ledit boîtier *(11)* et son siège sur le frein à disque.

7. Détecteur d'usure de la garniture selon une quelconque des revendications 1 à 7, *caractérisé en ce* qu'un canal de câble *(71)*, formé dans ledit boîtier *(11)*, comprend un élément d'étanchéité *(72)* pour la ou les ligne(s) de signaux du détecteur.

8. Détecteur d'usure de la garniture selon une quelconque des revendications 1 à 7, *caractérisé en ce* que ledit boîtier *(11)* est fait en matière plastique.

9. Détecteur d'usure de la garniture selon une quelconque des revendications 1 à 8, *caractérisé en ce* que ledit dispositif de rattrapage *(3, 6)* règle le ou les élément(s) de réglage *(1)* par un mouvement rotatif, au détecteur d'usure de la garniture *(10)* comprenant une unité d'entraînement rotatif à détecter l'angle de rotation respectif, et dans lequel ledit élément accoupleur consiste en un pignon *(21)*, qui s'engage dans une denture intérieure *(22)* correspondante du détecteur d'usure de la garniture *(10)*.

10. Détecteur d'usure de la garniture selon la revendication 9, *caractérisé en ce* que le détecteur d'usure de la garniture *(10)* comprend un potentiomètre rotatif *(12)*.

11. Détecteur d'usure de la garniture selon la revendication 10, *caractérisé en ce* qu'un engrenage démultiplicateur *(13)*, de préférence sous forme d'un engrenage cycloïde, est disposé entre ledit potentiomètre rotatif *(12)* et ledit élément accoupleur *(21, 22)*.

12. Détecteur d'usure de la garniture selon la revendication 11, *caractérisé en ce* que ledit engrenage démultiplicateur *(13)* est logé dans un dispositif de logement, qui porte ledit engrenage démultiplicateur *(13)* de façon à empêcher sa rotation pendant que le déplacement potentiel en sens longitudinal et transversal est retenu.

13. Détecteur d'usure de la garniture selon la revendication 12, *caractérisé en ce* que ledit engrenage démultiplicateur *(13)* et son dispositif de logement constituent, ensemble avec ledit potentiomètre rotatif (12), une unité intégrale et sont fixes, ensemble avec ledit potentiomètre, à l'intérieur dudit boîtier *(11)*.
